# EUROPEAN PATENT APPLICATION

(11) **EP 2 326 084 A1**
(43) Date of publication of application: **25.05.2011**
(21) Application number: 09806359.7
(22) Date of filing: 10.08.2009
(51) Int. Cl.: H04N 5/7613

(54) **MOBILE TERMINAL AND METHOD FOR TIMING RECORDING MOBILE PHONE TELEVISION PROGRAM**

(30) Priority: 13.08.2008 CN 200810210504
(71) Applicant: ZTE Corporation, Shenzhen, Guangdong 518057 (CN)
(72) Inventor: YI, Yunshan, Shenzhen Guangdong 518057 (CN); CHEN, Jun, Shenzhen Guangdong 518057 (CN); YIN, Fei, Shenzhen Guangdong 518057 (CN)
(74) Representative: Petraz, Gilberto Luigi
(86) International application number: PCT/CN2009/073160
(87) International publication number: WO 2010/017756

(57) **Abstract**

The present invention discloses a method for recording mobile phone television programs, which can record the mobile phone television programs according to schedule, the method comprises: a mobile terminal generating and storing one or more recording program request messages according to user configurations, the recording program request message comprising information of a mobile phone television program to be recorded and information of recording start time and recording end time thereof; and the mobile terminal starting automatically a mobile phone television client to receive data of the mobile phone television program to be recorded to write to a local file system of the mobile terminal at the recording start time. The present invention further provides a mobile terminal for recording mobile phone television programs according to schedule comprising a mobile phone television client, a recording request generating unit, a recording control unit and a storage unit.

## Description

### Technical Field

The present invention relates to the field of mobile phone television, and more particularly, to a mobile terminal and a method for recording mobile phone television programs according to schedule.

### Technical Background

With the rapid popularization of mobile phone multimedia services and the development of digital television technologies and networks, mobile phone television has become gradually a hot topic of conversation in China. The mobile phone television service is a service of watching TV using intelligent mobile phones having operating systems and video functions. Apparently, due to high popularity of mobile phone users and portability of mobile phones, the mobile phone television service exhibits broader influence than common televisions, and therefore CMMB occurs naturally.

CMMB is abbreviation for China Mobile Multimedia Broadcasting. It mainly offers broadcasting TV services to automobile onboard television and portable handheld terminals, such as mobile phones and PDAs with small screens. The main features of the CMMB are that:
1) It offers digital broadcasting TV programs, comprehensive information and emergency broadcasting services to achieve seamless cooperative coverage combining satellite transmission with terrestrial networks and to support public services;
2) It supports mobile phones, PDA, MP3, MP4, digital cameras, laptops and small receiving terminals in automobiles, trains, ships and planes to receive multimedia services, such as video, audio and data;
3) It uses the mobile multimedia broadcasting television technology with independent intellectual property, and the system is operable, maintainable and manageable, has broadcasting and bidirectional service functions, and can be gradually expanded according to operation requirements;
4) It supports an operating system combining the center with localities, has an encryption and authorization control management system, supports unified standards and operations, and supports user roaming across the country; and
5) The system is secure and reliable and has security precaution capability and good expandability, and can meet the development requirements of the mobile multimedia broadcasting television technologies and services.

The CMMB industry standards specify frame structures, channel encoding and modulation of broadcasting channel transmission signals in the mobile multimedia broadcasting system in a range of broadcasting service frequencies, and are applicable to broadcasting systems which transmit multimedia signals, such as television, broadcast and data information via satellites and/or terrestrial radios at broadcasting service frequencies in a frequency range from 30MHz to 3000MHz, thus national roaming can be achieved using a transmission technology, such as the STiMi technology.

It can be seen from the current application situations that implementation methods of the mobile phone television can be divided into three main types: the first method based on terrestrial broadcasting, including European DVB-H (Digital Video Broadcasting-Handheld) technology, Korean T-DMB (Terrestrial-Digital Multimedia Broadcasting) technology and MediaFLO technology released by American Qualcomm; the second method based on satellite broadcasting, including Korean S-DMB (Satellite Digital Multimedia Broadcasting) technology and European SDMB (Satellite Digital Multimedia Broadcasting) technology; and the third method based on mobile network, including the 3GPP MBMS (Multimedia Broadcast/Multicast Service) technology and stream media technology.

The appearance of the mobile phone telephones enriches people's lives, and enables people to free themselves from the traditional manner of watching TV programs at home such that they can watch TV at any time anywhere. As users further familiarize themselves with the mobile phone TV services and storage spaces of the mobile phones are expanded, the users are not satisfied with online video viewing only, they hope to be able to record programs at some time someday which they are interested in or like or think valuable to their mobile phones such that they can watch the programs on their mobile phones many times. Therefore, there is a need for a technical scheme for recording mobile phone television programs according to schedule.

### Summary of the Invention

A technical problem to be solved by the present invention is to solve the problem that users hope to record TV programs at some time to a mobile terminal.

In order to solve the problem described above, the present invention provides a method for recording mobile phone television programs according to schedule comprising:
a mobile terminal generating and storing one or more recording program request messages according to user configurations, wherein the recording program request message comprises information of a mobile phone television program to be recorded and information of recording start time and recording end time thereof; and
the mobile terminal starting automatically a mobile phone television client to receive data of the mobile phone television program to be recorded to write to a local file system of the mobile terminal at the recording start time, and to stop receiving the data to complete the recording at the recording end time.

Further, in the method, the information of the mobile phone television program to be recorded comprises a channel number of the mobile phone television program to be recorded and a recording program list labeling number of the mobile phone television program.

The mobile phone television client receives the data of the mobile phone television program to be recorded according to a combination of the channel number of the mobile phone television program to be recorded and the recording program list labeling number of the mobile phone television program.

Further, in the method, in order to start automatically the mobile phone television client to record the data of the mobile phone television program at the recording start time and stop recording the data at the recording end time, the mobile terminal sets a recording start event and a recording end event respectively, and allocates a start timer for the recording start event and a stop timer for the recording end event by registering the recording start event and the recording end event in an alarm clock event.

Timing time of the start timer is the same as the recording start time of the mobile phone television program in the recording program request message, and timing time of the stop timer is the same as the recording end time of the mobile phone television program in the recording program request message.

Further, the method also comprises finding recording program request messages to be cancelled in a recording program request message list, deleting the recording program request messages to be cancelled, and deleting events and timers corresponding to the deleted recording program request messages.

Further, in the method, the recording program request message also comprises information of a local path to which the recorded program is saved.

The mobile phone television client writes the data of the received mobile phone television program to the local file system of the mobile terminal in real time according to the information of the local path.

Further, in the method, if the mobile terminal is in a turn-off state at the recording start time, the mobile terminal automatically turns on and then starts the mobile phone television client to receive the data of the mobile phone television program to be recorded.

The present invention further provides a mobile terminal for recording mobile phone television programs according to schedule comprising a mobile phone television client, a recording request generating unit, a recording control unit and a storage unit.

The recording request generating unit is configured to generate one or more recording program request messages according to user configurations, send the recording program request messages to the recording control unit and store the recording program request messages in the storage unit, wherein the recording program request message comprises information of a mobile phone television program to be recorded and information of recording start time and recording end time thereon.

The recording control unit is configured to generate timing events according to the information of the recording start time and recording end time of the mobile phone television program, start automatically the mobile phone television client to receive data of the mobile phone television program to be recorded to write to a local file system of the mobile terminal at the recording start time, and to stop receiving the data to complete the recording at the recording end time.

The storage unit is configured to store the data of the mobile phone television program and the recording program request message.

Further, in the mobile terminal, the information of the mobile phone television program to be recorded, which is generated by the recording request generating unit, comprises a channel number of the mobile phone television program to be recorded and a recording program list labeling number of the mobile phone television program.

The recording control unit receives the data of the corresponding mobile phone television program to be recorded according to a combination of the channel number of the mobile phone television program to be recorded and the recording program list labeling number of the mobile phone television program.

Further, in the mobile terminal, in order to start automatically the mobile phone television client to record the data of the mobile phone television program at the recording start time and stop recording the data at the recording end time, the recording control unit is further configured to set a recording start event and a recording end event respectively, and allocates a start timer for the recording start event and a stop timer for the recording end event by registering the recording start event and the recording end event in an alarm clock event.

Timing time of the start timer is the same as the recording start time of the mobile phone television program in the recording program request message, and timing time of the stop timer is the same as the recording end time of the mobile phone television program in the recording program request message.

Further, in the mobile terminal, the recording program request message generated by the recording request generating unit also comprises information of a local path to which the recorded program is saved.

The recording control unit writes the data of the received mobile phone television program to the storage unit in real time according to the information of the local path.

Compared with the prior art, the present invention solves the problem that users hope to record a television program at some time to a mobile terminal such that the users can watch the program locally many times without needing to watch it online in real time each time, thus reducing the users' expense and facilitating the uses' use and enjoyment.

### Brief Description of the Drawings

FIG. 1 is a flow chart of a method for recording mobile phone television programs according to schedule in accordance with the present invention;
FIG. 2 is a block diagram of a mobile terminal in accordance with the present invention; and
FIG. 3 is a flow chart of a method for recording mobile phone television programs according to schedule in accordance with a specific embodiment of the present invention.

### Preferred Embodiments of the Invention

The present invention will be described in detail in conjunction with the accompanying figures and specific embodiments.

A mobile terminal in accordance with the present invention has mobile phone television functions. Information of mobile phone television programs, which can be obtained by users through an updating program information function provided by mobile phone television, is issued in advance by a program provider. Therefore, the users, in the present invention, knew arrangement of the mobile phone television programs in advance.

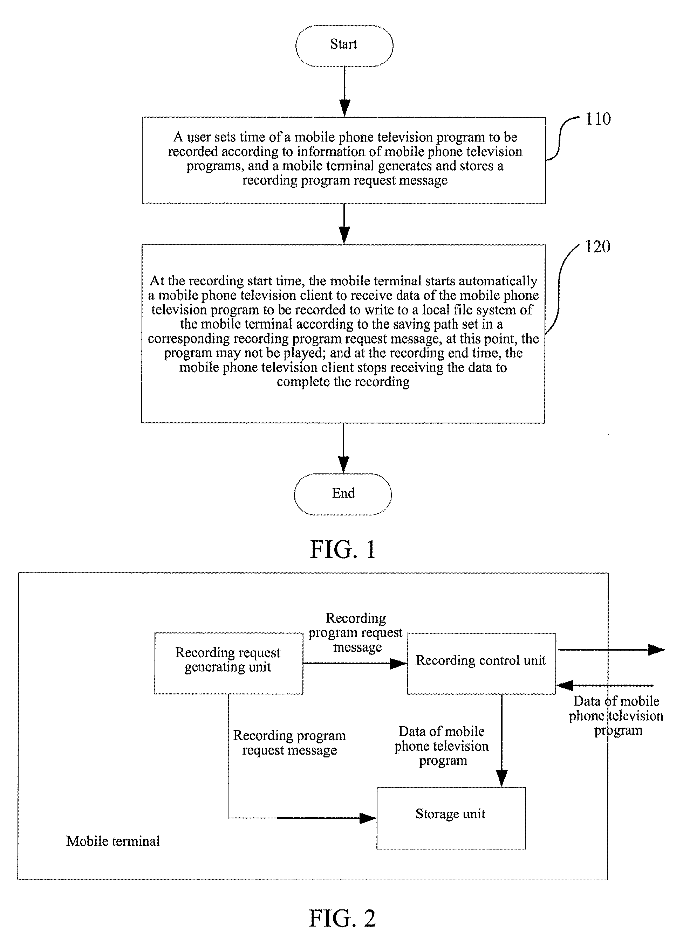

As shown in FIG. 1, a method for recording mobile phone television programs according to schedule in accordance with the present invention comprises the following steps:

Step 110, a user sets time of a mobile phone television program to be recorded according to information of mobile phone television programs, and a mobile terminal generates and stores a recording program request message.

The recording program request message comprises recording start time and recording end time of the mobile phone television program, the mobile phone television program to be recorded and a local path to which the recorded program is saved.

The information of the mobile phone television program to be recorded comprises a channel number of the mobile phone television program to be recorded and a recording program list labeling number of the mobile phone television program.

A plurality of recording program request messages may be applied for to meet the user's demand of recording programs at different times.

The recording program request messages may also be cancelled, i.e., the recording program request messages which are required to be cancelled are found and deleted in a list of the recording program request messages.

Step 120, at the recording start time, the mobile terminal starts automatically a mobile phone television client to receive data of the mobile phone television program to be recorded to write to a local file system of the mobile terminal according to the saving path set in a corresponding recording program request message, at this point, the program may not be played; and at the recording end time, the mobile phone television client stops receiving the data to complete the recording.

In order for the mobile terminal to start the recording at the recording start time and stop the recording at the recording end time automatically, the mobile terminal may set a recording start event and a recording end event, and set a timer for each event, called start timer and stop timer respectively hereinafter, by registering the two events in a clock alarm event. Timing time set in the start timer is the same as the recording start time of the mobile phone television program in the recording program request message, and timing time set in the stop timer is the same as the recording end time of the mobile phone television program in the recording program request message. When the user deletes a recording program request message, the mobile terminal deletes the corresponding set event and timer as well.

If the mobile terminal is in a turn-off state at the recording start time, the mobile terminal will automatically turns on, and then starts the mobile phone television client to receive the data of the mobile phone television program to be recorded.

The mobile phone television client receives the data of the corresponding mobile phone television program according to a combination of the channel number of the mobile phone television program to be recorded and the recording program list labeling number of the mobile phone television program.

As shown in FIG. 2, a mobile terminal used to record mobile phone television programs according to schedule in accordance with the present invention comprises a mobile phone television client, a recording request generating unit, a recording control unit and a storage unit.

The recording request generating unit is configured to generate one or more recording program request messages according to user configurations, send the recording program request messages to the recording control unit and store them in the storage unit, wherein a recording program request message comprises information of a mobile phone television program to be recorded and information of its recording start time and recording end time.

The recording control unit is configured to generate timing events according to the information of the recording start time and recording end time of the mobile phone television program, start automatically the mobile phone television client to receive data of the mobile phone television program to be recorded to write to a local file system of the mobile terminal at the recording start time, and to stop receiving the data to complete the recording at the recording end time.

The information of the mobile phone television program to be recorded, which is generated by the recording request generating unit, comprises the recording start time and recording end time of the mobile phone television program, the mobile phone television program to be recorded and a local path to which the recorded program is saved.

The information of the mobile phone television program to be recorded comprises a channel number of the mobile phone television program to be recorded and a recording program list labeling number of the mobile phone television program.

A plurality of recording program request messages may be generated by the recording request generating unit to meet the user's demand of recording programs at different times.

The recording program request messages may also be cancelled, i.e., the recording program request messages which are required to be cancelled are found and deleted in a list of the recording program request messages.

The recording control unit receives the data of the received mobile phone television program to write to the storage unit according to the local path to which the recorded program is saved in the recording program request message.

In order for the recording control unit to record the data of the mobile phone television program at the recording start time and stop the recording at the recording end time automatically, the recording control unit may by further configured to set a recording start event and a recording end event, and set a timer for each event by registering the two events in a clock alarm event, wherein the timer is a start timer or a stop timer.

Timing time set in the start timer is the same as the recording start time of the mobile phone television program in the recording program request message, and timing time set in the stop timer is the same as the recording end time of the mobile phone television program in the recording program request message.

The storage unit is configured to store the data of the mobile phone television program and the recording program request message.

The present invention will be further described in conjunction with a specific embodiment.

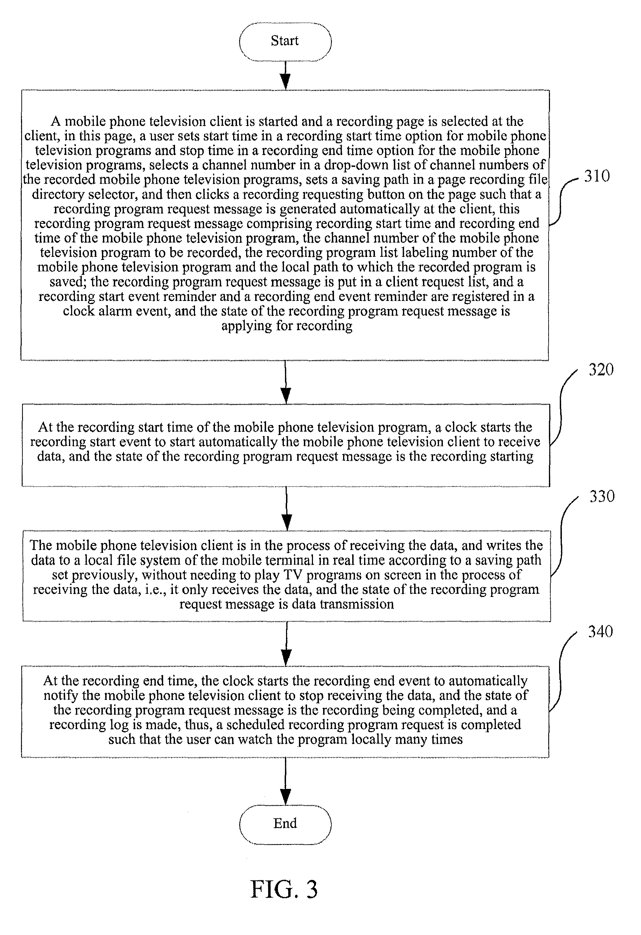

As shown in FIG. 3, a flow chart of a method for recording mobile phone television programs according to schedule comprises the following steps:

Step 310, a mobile phone television client is started and a recording page is selected at the client. In this page, a user sets start time in a recording start time option for mobile phone television programs and stop time in a recording end time option for the mobile phone television programs, selects a channel number in a drop-down list of channel numbers of the recorded mobile phone television programs (it is noted that the channel number and program list number can be obtained automatically through an updating program information function), sets a saving path in a page recording file directory selector, and then clicks a recording requesting button on the page such that a recording program request message is generated automatically at the client, this recording program request message comprising recording start time and recording end time of the mobile phone television program, the channel number of the mobile phone television program to be recorded, the recording program list labeling number of the mobile phone television program and the local path to which the recorded program is saved; the recording program request message is put in a client request list, and a recording start event reminder and a recording end event reminder are registered in a clock alarm event, and the state of the recording program request message is applying for recording.

Step 320, at the recording start time of the mobile phone television program, a clock starts the recording start event (even in the case that the mobile terminal is in a turn-off state, this event can be processed after the mobile terminal is turned on automatically) to start automatically the mobile phone television client to receive data, and the state of the recording program request message is the recording starting.

Step 330: the mobile phone television client is in the process of receiving the data, and writes the data to a local file system of the mobile terminal in real time according to a saving path set previously, without needing to play TV programs on screen in the process of receiving the data, i.e., it only receives the data, and the state of the recording program request message is data transmission;

Step 340, at the recording end time, the clock starts the recording end event to automatically notify the mobile phone television client to stop receiving the data, and the state of the recording program request message is the recording being completed, and a recording log is made, thus, a scheduled recording program request is completed such that the user can watch the program locally many times.

The above embodiments are only preferred specific embodiments of the present invention, and the scope of the present invention is not limited thereto. Any variation or substitution within the technical scope disclosed by the present invention, which may occur easily to persons skilled who have acquainted themselves with the art, should be included in the protection scope of the present invention. Therefore, the protection scope of the present invention should be subject to the protection scope of the appended claims.

### Industrial Applicability

The present invention solves the problem that users hope to record a television program at some time to a mobile terminal such that the users can watch the program locally many times without needing to watch it online in real time each time, thus reducing the users' expense and facilitating the uses' use and enjoyment.

## Claims

1. A method for recording mobile phone television programs, which can record the mobile phone television programs according to schedule, the method comprises:
a mobile terminal generating and storing one or more recording program request messages according to user configurations, the recording program request message comprising information of a mobile phone television program to be recorded and information of recording start time and recording end time thereof; and
the mobile terminal starting automatically a mobile phone television client to receive data of the mobile phone television program to be recorded to write to a local file system of the mobile terminal at the recording start time, and to stop receiving the data to complete the recording at the recording end time.

2. The method according to claim 1, wherein:
the information of the mobile phone television program to be recorded comprises a channel number of the mobile phone television program to be recorded and a recording program list labeling number of the mobile phone television program; and
the mobile phone television client receives the data of the mobile phone television program to be recorded according to a combination of the channel number of the mobile phone television program to be recorded and the recording program list labeling number of the mobile phone television program.

3. The method according to claim 1, wherein:
in order to start automatically the mobile phone television client to record the data of the mobile phone television program at the recording start time and stop recording the data at the recording end time, the mobile terminal sets a recording start event and a recording end event respectively, and allocates a start timer for the recording start event and a stop timer for the recording end event by registering the recording start event and the recording end event in an alarm clock event; wherein
timing time of the start timer is the same as the recording start time of the mobile phone television program in the recording program request message, and timing time of the stop timer is the same as the recording end time of the mobile phone television program in the recording program request message.

4. The method according to claim 3, further comprising:
finding recording program request messages to be cancelled in a recording program request message list, deleting the recording program request messages to be cancelled, and deleting events and timers corresponding to the deleted recording program request messages.

5. The method according to claim 1, wherein:
the recording program request message further comprises information of a local path to which the recorded program is saved; and
the mobile phone television client writes the data of the received mobile phone television program to the local file system of the mobile terminal in real time according to the information of the local path.

6. The method according to claim 1, wherein:
if the mobile terminal is in a turn-off state at the recording start time, the mobile terminal automatically turns on and then starts the mobile phone television client to receive the data of the mobile phone television program to be recorded.

7. A mobile terminal configured to record mobile phone television programs according to schedule, the mobile terminal comprises a mobile phone television client, a recording request generating unit, a recording control unit and a storage unit, wherein
the recording request generating unit is configured to generate one or more recording program request messages according to user configurations, send the recording program request messages to the recording control unit and store the recording program request messages in the storage unit, wherein
the recording program request message comprises information of a mobile phone television program to be recorded and information of recording start time and recording end time thereof;
the recording control unit is configured to generate timing events according to the information of the recording start time and recording end time of the mobile phone television program, start automatically the mobile phone television client to receive data of the mobile phone television program to be recorded to write to a local file system of the mobile terminal at the recording start time, and to stop receiving the data to complete the recording at the recording end time; and
the storage unit is configured to store the data of the mobile phone television program and the recording program request message.

8. The mobile terminal according to claim 7, wherein:
the information of the mobile phone television program to be recorded, which is generated by the recording request generating unit, comprises a channel number of the mobile phone television program to be recorded and a recording program list labeling number of the mobile phone television program;
the recording control unit receives the data of the corresponding mobile phone television program to be recorded according to a combination of the channel number of the mobile phone television program to be recorded and the recording program list labeling number of the mobile phone television program.

9. The mobile terminal according to claim 7, wherein:
in order to start automatically the mobile phone television client to record the data of the mobile phone television program at the recording start time and stop recording the data at the recording end time, the recording control unit is further configured to set a recording start event and a recording end event respectively, and allocates a start timer for the recording start event and a stop timer for the recording end event by registering the recording start event and the recording end event in an alarm clock event; wherein
timing time of the start timer is the same as the recording start time of the mobile phone television program in the recording program request message, and timing time of the stop timer is the same as the recording end time of the mobile phone television program in the recording program request message.

10. The mobile terminal according to claim 7, wherein:
the recording program request message generated by the recording request generating unit further comprises information of a local path to which the recorded program is saved; and
the recording control unit writes the data of the received mobile phone television program to the storage unit in real time according to the information of the local path.
